Europäisches Patentamt

(19) European Patent Office

Office européen des brevets

(11) Numéro de publication: **0 022 683**
**B1**

(12) **FASCICULE DE BREVET EUROPEEN**

(45) Date de publication du fascicule du brevet: **18.07.84**  (51) Int. Cl.³: **C 21 C 5/40**

(21) Numéro de dépôt: **80400804.3**

(22) Date de dépôt: **05.06.80**

(54) **Dispositif d'aiguillage des gaz et procédé de fonctionnement d'un tel dispositif.**

(30) Priorité: **07.06.79 FR 7914583**

(43) Date de publication de la demande:
**21.01.81 Bulletin 81/3**

(45) Mention de la délivrance du brevet:
**18.07.84 Bulletin 84/29**

(84) Etats contractants désignés:
**BE DE GB IT LU NL SE**

(56) Documents cités:
**DE - A - 1 758 325**
**DE - A - 2 734 962**
**FR - A - 1 319 597**

(73) Titulaire: **CREUSOT-LOIRE ENTREPRISES**
**Tour GAN Quartier Alsace**
**F-92400 Courbevoie-la-Défense (FR)**

(73) Titulaire: **UNION SIDERURGIQUE DU NORD ET DE**
**L'EST DE LA FRANCE par abréviation "USINOR"**
**La Défense 9, 4, place de la Pyramide**
**F-92800 Puteaux (FR)**

(72) Inventeur: **Namy, Gérald**
**13 cours Fauriel**
**F-42100 Saint-Etienne (FR)**
Inventeur: **Cordier, Jean**
**28 rue de Tourcoing Malo-les-Bains**
**F-59240 Dunkerque (FR)**

(74) Mandataire: **Leroy, Pierre**
**CREUSOT-LOIRE 15 rue Pasquier**
**F-75383 Paris Cedex 08 (FR)**

Courier Press, Leamington Spa, England.

## Description

La présente invention concerne un dispositif complexe d'aiguillage des gaz et notamment de ceux captés au bec des convertisseurs d'aciérie ou en provenance d'installations similaires.

Les gaz captés au bec des convertisseurs d'aciérie sont à haute température en chargés en poussières. S'ils sont captés sans combustion, ou avec seulement une combustion partielle de l'oxyde de carbone qu'ils contiennent, ils possèdent un certain pouvoir calorifique. Il peut donc être intéressant de les récupérer, puis de les utiliser comme combustible ou comme gaz réducteurs.

Après qu'ils soient passés successivement dans la hotte de captage, la cheminée de refroidissement, le saturateur, le laveur et le ventilateur de tirage, ces gaz refroidis, mais encore chauds, sont saturés en vapeur d'eau et contiennent des gouttelettes d'eau.

Après leur passage dans le ventilateur de tirage, ces gaz peuvent avoir deux destinations:

— soit être évacués à l'atmosphère au moyen d'une cheminée se terminant par une torchère, dans laquelle l'oxyde de carbone est brûlé en gaz carbonique,
— soit être dirigés vers un gazomètre de stockage et un réseau de distribution.

L'orientation des gaz tantôt sur l'une, tantôt sur l'autre de ces deux voies, nécessite un dispositif d'aiguillage spécial, assurant une conne sécurité de fonctionnement dans des conditions rendues difficiles par les gros débits de gaz et par la nature de ces gaz encore chauds bien que refroidis, encore chargés de poussières bien que dépoussiérés, pouvant être saturés en vapeur d'eau et contenant des gouttelettes d'eau.

On connait déjà divers types de tels dispositifs. Mais ils sont généralement encombrants; leur manoeuvre est lente, et la perte de charge qu'ils provoquent dans le circuit des gaz est élevée.

Le but de la présente invention est de réaliser un dispositif d'aiguillage très compact, se manoeuvrant rapidement, et dont la perte de charge créée dans le circuit est faible et reste constante en toute position de l'élément mobile. Un autre but de l'invention est de réaliser une élimination des gouttelettes d'eau contenues dans le gaz.

A cet effet, la présente invention a pour objet un ensemble d'aiguillage d'un gaz pouvant être chaud, chargé de poussières, saturé en vapeur d'eau et contenant des gouttelettes d'eau, permettant à la fois de faire débiter le flux gazeux qu'il reçoit tangentiellement et horizontalement du réseau de captage du gaz soit dans une première conduite verticale dirigée vers le haut, soit dans une deuxième conduite verticale dirigée vers le bas, d'éliminer les gouttelettes d'eau et par voie de conséquence une partie des poussières, et d'assurer simultanément une étanchéité vers celle de ces deux conduites qui est momentanément non alimentée en gaz, cet ensemble étant caractérisé en ce qu'il comprend un corps fixe contenant une cloche mobile comportant une tige de manoeuvre et munie des moyens aptes à constituer deux joints assurant l'étanchéité alternativement vers chacune des deux conduites verticales précitées, le joint assurant l'étanchéité vers le bas vis-à-vis de la deuxième conduite verticale étant obligatoirement constitué par un joint d'eau, et en ce que ledit corps fixe, de forme spéciale, coopère avec ladite cloche pour constituer un cyclone éliminant les gouttelettes d'eau et un partie des poussières contenues dans le gas à l'entrée du corps.

En position basse, ledit joint d'eau est fixe et reçoit le rebord inférieur de la cloche, assurant ainsi l'étanchéité entre le réseau de captage du gaz, en amont, et le réseau d'utilisation, tandis que le gaz s'évacue dans la partie supérieure du corps et se dirige vers une torchère pour y être brûlé.

En position haute, une jupe métallique fixée sur le corps de la cloche et constituant un joint d'eau mobile avec la cloche assure, par simple pénétration d'une partie fixe adaptée, l'étanchéité entre le réseau de captage du gaz et le réseau conduisant à la torchère, tandis que le gaz s'évacue dans la partie inférieure du corps et se dirige vers le réseau d'utilisation et son gazomètre.

Selon une option possible de la présente invention, la jupe métallique fixée sur le corps de la cloche précédemment citée peut être remplacée par un dispositif d'étanchéité dit du type à joint sec constitué par une couronne conique solidaire de la cloche en sa partie supérieure et assurant une étanchéité entre le réseau de captage du gaz et le réseau conduisant à la torchère, par simple application de ladite couronne conique contre un siège fixe adapté. Un arrosage intermittent au-dessus du joint sec permet un lavage régulier de ce dernier et maintient la propreté de la zone necessaire à la bonne étanchéité.

Selon une autre option possible de la présente invention, un château d'eau placé sous le siège de la cloche en position basse alimente par gravité un joint hydraulique de sécurité situé au-dessous de lui. Celui-ci assure une étanchéité rapide et efficace entre l'ensemble d'aiguillage et le réseau d'utilisation. La réduction du temps de constitution du joint hydraulique sera obtenue en agissant sur la section du passage de l'eau entre le château d'eau et le joint hydraulique ou/et en agissant sur la pression régnant dans le château d'eau. Il est recommandé que la constitution de ce joint hydraulique de sécurité soit commandée de manière automatique en cas d'incident, notamment lors de la détection d'une inversion de la circulation du gaz dans le réseau d'utilisation.

Selon une autre option possible de la présente invention, l'ensemble d'aiguillage peut avantageusement être muni d'un dispositif d'équilibrage des pressions gazeuses entre l'amont et l'aval du joint hydraulique de sécurité, constitué d'un clapet á eau anti-retour fonctionnant dans les deux sens de surpression ou de dépression accidentelle entre l'aval de l'ensemble d'aiguillage et le réseau d'utilisation. Ce clapet anti-retour est placé à proximité dudit joint et de la conduite en aval, et se trouve en communication à la fois avec l'amont et l'aval dudit joint.

Selon une autre option possible de la présente invention, l'ensemble d'aiguillage des gaz selon l'invention comporte à sa partie inférieure une hélice fixe dont le moyeu sert de guidage inférieur à la tige de manoeuvre de la cloche, et dont les pales, par la mise en rotation du gaz, contribuent à la séparation de l'eau vésiculaire contenue dans le gaz.

L'invention a aussi pour objet une méthode de fonctionnement de l'ensemble d'aiguillage des gaz précédemment défini, caractérisé en ce que la descente de la cloche, commandée mécaniquement, respecte un cycle de vitesses tel que la descente est rapide, c'est-à-dire que la vitesse est comprise entre 18 et 60 mètres par minute, avant que la cloche prenne contact avec le joint d'eau fixe, et tel que la descente est lente, c'est-à-dire que la vitesse est comprise entre 1 et 6 mètres par minute, à partir du moment où la cloche pénètre dans le joint d'eau fixe, et réciproquement en ce qui concerne la montée de la cloche.

Comme on le comprend, l'un des principaux avantages de l'ensemble d'aiguillage des gaz selon l'invention est d'être très compact, et, ainsi, de s'intégrer facilement dans le schéma général d'une aciérie, même existante ou à transformer, tout en permettant néanmoins le passage de très gros débits de gaz.

Un autre avantage du dispositif selon l'invention et aussi de sa méthode de fonctionnement est de permettre une manoeuvre rapide de la cloche entre ses positions haute et basse. Ce temps de manoeuvre peut être par exemple de l'ordre de 5 secondes.

Un autre avantage du dispositif selon l'invention est que la perte de charge qu'il crée dans le circuit d'écoulement des gaz est faible. Un avantage supplémentaire est que cette perte de charge reste pratiquement constante quelle que soit la position de la cloche (haute, intermédiaire, ou basse). L'intégration de la vanne dans l'installation n'a pas d'incidence sur le processus de captation.

Un autre avantage essentiel et original du dispositif selon l'invention est qu'il assure, en même temps que l'aiguillage du gaz vers la torchère ou vers le gazomètre, l'élimination de la quasi-totalité des gouttelettes d'eau, et d'une bonne partie des poussières, contenues dans le gaz, grâce à sa configuration de cyclone.

Un autre avantage de ce dispositif est qu'il réalise rapidement un joint d'eau positif avec garde hydraulique donc parfaitement étanche (soit vers le haut, soit vers les bas) et de forte hauteur, ce qui lui assure une bonne tenue aux surpressions accidentelles.

Sa sécurité de fonctionnement en cas de pannedes réseaux généraux (électricité ou air comprimé) est positive, car la cloche tombe alors de son propre poids en position de sécurité, c'est à dire en position d'isolement du gazomètre et de mise en communication avec la torchère.

La position de la cloche et les sécurités peuvent être visualisées sans ambiguité.

Le fonctionnement correct de cet ensemble d'aiguillage est possible même aved du gaz sale, grâce à la conception et à la disposition des différents éléments constitutifs. Par ailleurs, il élimine l'eau vésiculaire sale éventuellement contenue dans le gaz qui vient de traverser un ventilateur lavé. Le fonctionnement de ce dispositif est insensible au gel, une circulation d'eau étant assurée en permanence.

Afin de bien faire comprendre l'invention, on va décrire ci-après, à titre d'exemple non limitatif, un mode de réalisation selon l'invention d'un ensemble d'aiguillage des gaz d'un convertisseru d'aciérie captés sans combustion, c'est à dire pratiquement sans entrée parasite d'air extérieur.

La figure 1 est une coupe horizontale (selon AA sur la figure 2) de l'ensemble d'aiguillage au niveau de l'arrivée du gaz en provenance du convertisseur d'aciérie et du ventilateur extracteur. Elle montre l'entrée tangentielle et le corps cylindrique formant cyclone.

La figure 2 est une coupe verticale de cet ensemble avec position basse de la cloche, c'est-à-dire mise en communication du gaz avec la torchère.

La figure 3 est une coupe verticale de ce même ensemble, avec position haute de la cloche, c'est-à-dire mise en communication du gaz avec le gazomètre.

La figure 4 est une coupe verticale de ce même ensemble lorsque, en cas 'accident, on isole hydrauliquement le départ de la conduite vers le gazomètre.

La figure 5 est une coupe verticale d'un joint de sécurité comportant une conduite d'arrivée des gas plongeante et un départ par la périphérie.

La figure 6 est une coupe représentant la partie haute du corps fixe de l'ensemble d'aiguillage et sa cloche mobile dans le cas de l'option du joint sec.

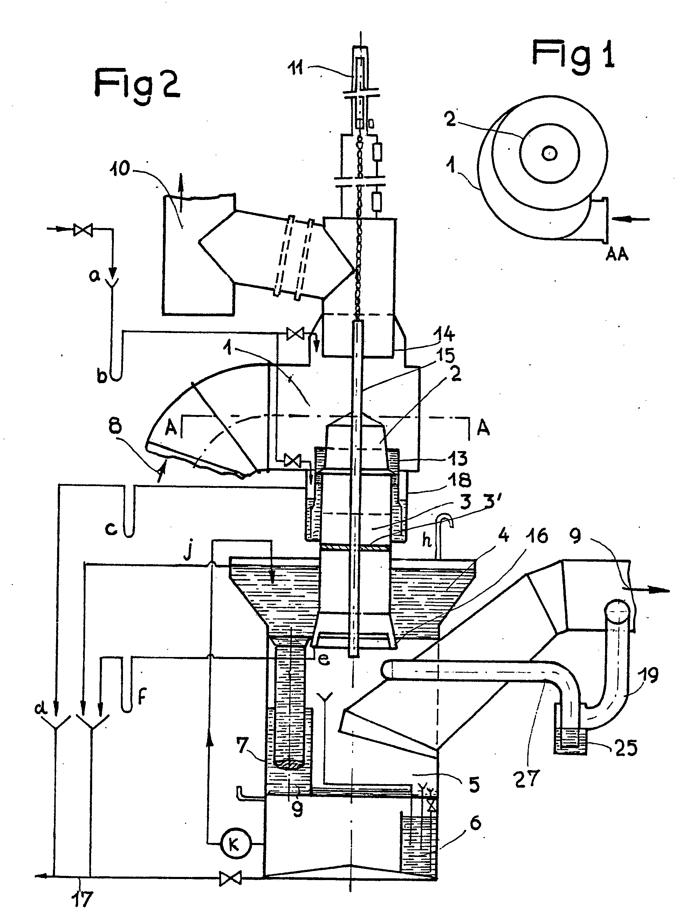

Sur la figure 1, on voit que l'arrivée horizontale du gaz dans l'ensemble d'aiguillage s'effectue tangentiellement au corps fixe 1, lequel forme avec la cloche mobile 2 un cyclone qui oriente le gaz vers le haut ou vers le bas par le déplacement de la cloche 2 et élimine l'eau vésiculaire.

Sur la figure 2, la cloche 2 est en position basse. Elle repose dans un joint d'eau fixe 18 qui assure l'étanchéité entre le réseau de captage 8 et le réseau d'utilisation 9. Le gaz passe dans la partie supérieure du corps 1 et se dirige en 10 vers la torchère. La cloche mobile est manoeuvrée par le vérin 11.

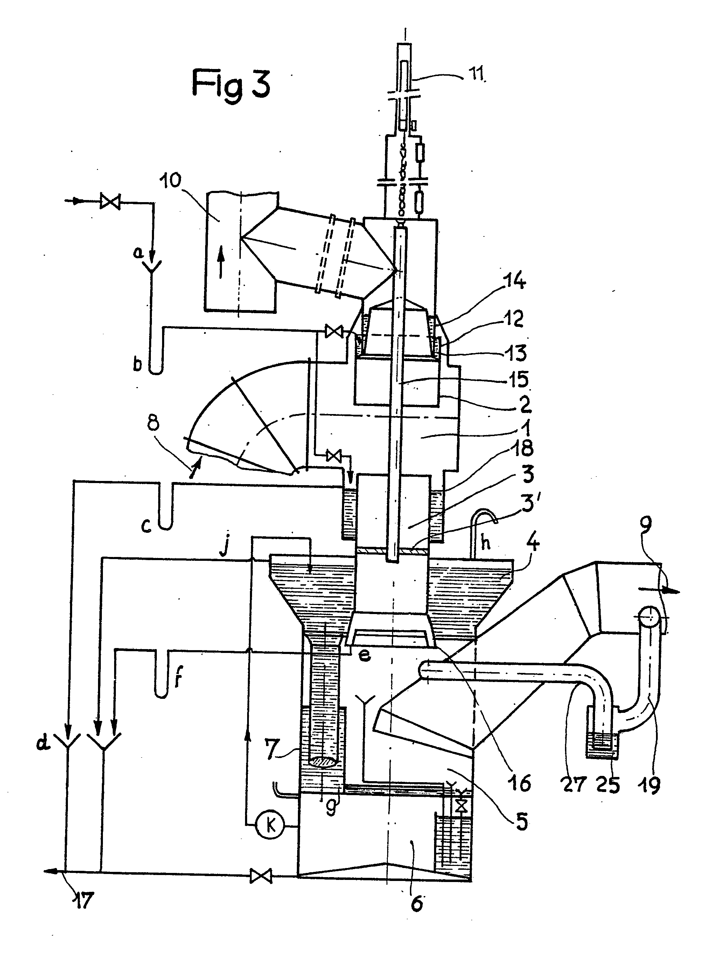

Sur la figure 3, la cloche 2 est en position haute. Une jupe 12 fixée sur la cloche 2 contenant un joint d'eau mobile 13 réalise par simple application contre une partie fixe adaptée 14 l'étanchéité entre le réseau de captage 8 et le circuit 10 vers la torchère. Ce joint d'eau supérieur 13 est alimenté par la conduite a et la garde hydraulique b. Le gaz passe dans la partie inférieure du corps 1 et se dirige vers le réseau d'utilisation 9 et son gazomètre, en traversant le séparateur d'eau vésiculaire 3', l'eau ainsi récupérée étant évacuée par l'intermédiaire de la gouttière 16. Ledit séparateur d'eau vésiculaire 3' est essentiellement constitué par une hélice fixe dont le moyeu sert de guidage inférieur à la tige de manoeuvre 15 de la cloche 2.

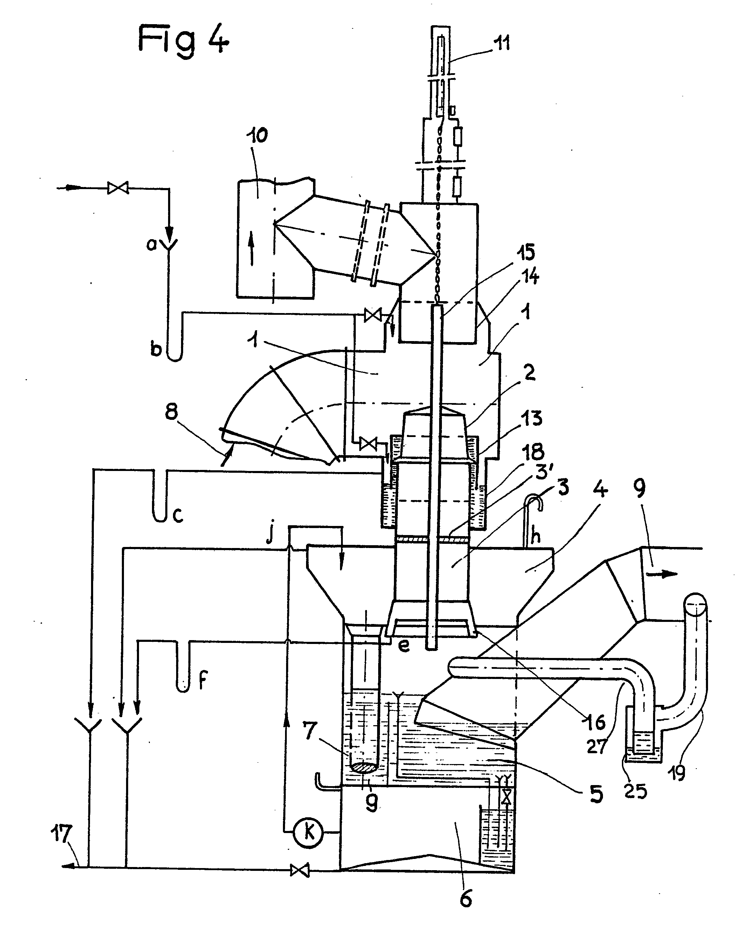

Un château d'eau 4 placé sous la cloche 2 et autour du séparateur 3' peut alimenter par gravité et par l'intermédiaire d'une garde hydraulique 7 un joint hydraulique 5 situé plus bas qui peut constituer , en cas de besoin, un isolement rapide et efficace entre l'ensemble d'aiguillage et le réseau d'utilisation 9, comme représenté sur la figure 4. Sous ce joint hydraulique inférieur de sécurité 5 est disposé un réservoir décanteur 6.

Ce réservoir permet, lorsqu'on supprime le joint hydraulique 5, de renvoyer l'eau propre à l'aide d'une pompe K dans le château d'eau 4, et de renvoyer les eaux boueuses ailleurs en 17. Le fonctionnement de ce joint hydraulique inférieur de sécurité 5 est explicité ci-après, en s'appuyant sur la figure 4.

Le fonctionnement de cet ensemble d'aiguillage est le suivant:

Fonctionnement hors récupération (fig. 2)
La cloche 2 est en position basse.

Le joint d'eau inférieur de la cloche est alimenté par a et une garde hydraulique b. Cette eau ainsi que l'eau vésiculaire séparée du gaz dans le corps 1 grâce à l'effet de cyclone s'évacue par l'intermédiaire de la garde hydraulique c en d.

On vérifie le bon fonctionnement du joint hydraulique en d.

L'eau du circuit est évacuée en 17.

Fonctionnement pendant la phase de récupération (fig. 3)
La cloche est en position haute, le joint hydraulique supérieur 13 de la cloche est alimenté par a et la garde hydraulique b.

On vérifie le bon fonctionnement du joint d'eau en d.

L'eau vésiculaire est séparée du gaz d'une part, dans le corps 1 grâce à l'effet cyclonique et évacuée en 17 par l'intermédiaire de la garde hydraulique c, et, d'autre part, par l'hélice 3' pour être collectée dans la gouttière 16 en e, puis évacuée en 17 par l'intermédiaire d'une garde hydraulique f.

Le cycle de commande de descente et de montée de la cloche est décrit ci-après:

— En fonctionnement normal, la récupération des gaz par le circuit d'utilisation 9 commence avec un certain retard sur le début du soufflage. et se termine avec une certaine avance sur la fin du soufflage. La commande de montée de la cloche est déclenchée soit manuellement par l'opérateur, soit automatiquement en séquence, étant donné par ailleurs qu'un verrouillage existe si toutes les conditions autorisant ce passage en récupération ne sont pas réunies.

L'ordre de montée étant donné, la cloche quitte sa position basse pour atteindre rapidement le régime de grande vitesse dont la valeur réglable est comprise entre 18 et 60 m/mn. Le passage en petite vitesse 1 à 6 m/mn est automatiquement enclenché environ 300 mm avant la fin de la course.

— La commande de descente de la cloche est ordonnée soit manuellement par l'opérateur soit automatiquement en séquence ou suite à un enclenchement d'une sécurité au niveau du dispositif ou en amont ou en aval de de dernier.

— L'ordre de descente étant donné, la cloche quitte sa position haute pour atteindre rapidement le régime de grande vitesse dont la valeur réglable est comprise entre 18 et 60 m/mn. Le passage en petite vitesse intervient automatiquement après pénétration de la cloche 2 dans la garde hydraulique 18.

Fonctionnement du joint d'eau inférieur (fig. 4)
En cas d'incident, le joint hydraulique inférieur 5 est constitué en ouvrant le système d'obturation g.

Un évent h placé à la partie supérieure du château d'eau évite la mise en dépression de celui-ci.

La surverse, lorsqu'elle est nécessaire, retourne à l'égout par le trop plein du réservoir j.

Lorsqu'on veut casser le joint d'eau 5, l'eau est transférée dans le réservoir décanteur 6. L'eau propre est ensuite renvoyée dans le château d'eau 4 à l'aide de la pompe K, tandis que les eaux chargées sont évacuées en 17.

Un dispositif de sécurité 25 évite des différences de pression importantes entre l'amont 27 et l'aval 19 du joint 5.

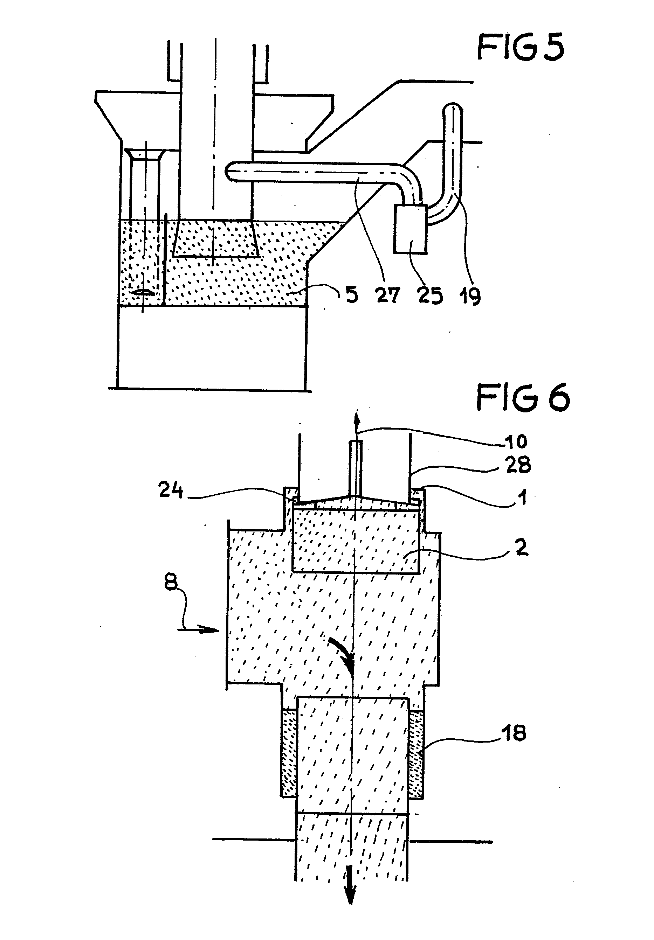

Dispositif de sécurité pour le bon fonctionnement du joint d'eau inférieur 5 (figure 5)
La figure 5 représente une coupe verticale d'un dispositif d'équilibrage 25 des pressions gazeuses entre l'amont et l'aval du joint hydraulique inférieur 5. C'est en fait un clapet anti-retour fonctionnant dans le deux sens de surpression ou de dépression accidentelle entre l'amont 27 et l'aval 19 du joint 5, afin d'amortir notablement les différences de pression accidentelles qui seraient susceptibles de chasser brutalement l'eau du joint hydraulique inférieur 5 si ce dispositif 25 n'existait pas.

Ce dispositif d'équilibrage 25 est en communication d'une part avec l'amont du joint 5 par la conduite 27, d'autre part avec l'aval du joint 5, c'est à dire de réseau d'utilisation 9, par la conduite 19.

Joint sec (figure 6) (variante du joint hydraulique supérieur selon la figure 3)

La figure 6 représente une variante, de type joint sec, du joint hydraulique supérieur 13 de la figure 3.

Dans cette variante, la cloche 2 ne comporte plus la jupe métallique 12 représentée sur la figure 3. Elle comporte sur sa face supérieure une couronne conique 24 qui vient s'appliquer contre l'extrémité inférieure d'un siege fixe 28 de la conduite alimentant le réseau 10 de la torchère. Il est nécessaire de maintenir cette couronne conique en très bon état de propreté, par un arrosage intermittant, mais fréquent. Dans ces conditions, l'étanchéité ainsi assurée par le joint sec est satisfaisante.

Il est bien entendu que l'on peut, sans sortir du cadre de l'invention, imaginer des variantes et perfectionnements de détails, ainsi qu'envisager l'emploi de moyens équivalents.

Le dispositif selon l'invention s'applique spécialement bien à l'aiguillage des gaz captés au bec des convertisseurs d'aciérie. Mais ses applications possibles sont très diverses, car il peut s'appliquer utilement à l'aiguillage de tous les gaz industriels chauds, chargés de poussières et saturés en vapeur d'eau.

**Revendications**

1. Ensemble d'aiguillage d'un gaz pouvant être chaud, chargé de poussières, saturé en vapeur d'eau, et pouvant contenir des gouttelettes d'eau, permettant à la fois de faire débiter le flux gazeux qu'il reçoit tangentiellement et horizontalement du réseau (8) de gaz amont soit dans une première conduite verticale (14) dirigée vers le haut, soit dans une deuxième conduite verticale (3) dirigée vers le bas, d'éliminer les gouttelettes d'eau et une partie des poussières, et d'assurer simultanément une étanchéité vers celle des deux conduites qui est momentanément non alimentée en gaz, cet ensemble étant caractérisé en ce qu'il comprend un corps fixe (1) contenant une cloche mobile (2) comportant une tige de manoeuvre (15) et munie de moyens aptes à constituer deux joints assurant l'étanchéité alternativement vers chacune des deux conduites verticales précitées, le joint assurant l'étanchéité vers le bas vis-à-vis de la deuxième conduite verticale (3) étant obligatoirement constitué par un joint d'eau (18) et en ce que ledit corps fixe (1), de forme spéciale, coopère avec ladite cloche (2) pour constituer un cyclone éliminant les gouttelettes d'eau et une partie des poussières contenues dans le gaz à l'entrée du corps (1).

2. Ensemble d'aiguillage selon la revendication 1, caractérisé en ce que, en position basse de la cloche (2), ledit joint d'eau est fixe et reçoit le rebord inférieur de la cloche, assurant ainsi l'étanchéité entre le réseau de gaz amont (8) et le réseau d'utilisation (9), tandis que le gas s'évacue dans la partie supérieure du corps 1.

3. Ensemble d'aiguillage selon la revendication 2, caractérisé en ce que, en position haute, une jupe métallique fixée sur le corps de la cloche (2) et constituant un joint d'eau (13) mobile avec la cloche (2) assure, par simple pénétration d'une partie fixe adaptée (14), l'étanchéité entre le réseau amont (8) et le réseau (10) situé en aval de la partie supérieure du corps (1), tandis que le gaz s'évacue par la partie inférieure du corps (1) et se dirige vers le réseau d'utilisation (9).

4. Ensemble d'aiguillage selon la revendication 2, caractérisé en ce que la cloche (2), en sa partie supérieure, comporte une couronne conique (24) qui, en position haute, vient appuyer sur un siège fixe (28), cet agencement constituant alors un joint sec assurant une étanchéité relative suffisante du côté du réseau (10) situé en aval de la partie supérieure du corps fixe (1).

5. Ensemble d'aiguillage selon l'une quelconque des revendications 1 à 4, comportant un joint hydraulique de sécurité (5) assurant une étanchéité rapide et efficace entre l'ensemble d'aiguillage et le réseau d'utilisation (9), même en cas de surpressions accidentelles, caractérisé en ce que ce joint hydraulique de sécurité (5) est alimenté par gravité par un château d'eau (4) placé sous le siège de la cloche (2) en position basse.

6. Ensemble d'aiguillage selon la revendication 5, caractérisé en ce que la constitution du joint hydraulique de sécurité (5) est commandée de manière automatique en cas d'incident.

7. Ensemble d'aiguillage selon la revendication 6, caractérisé par l'existence d'un dispositif qui permet de limiter une éventuelle surpression ou dépression du joint hydraulique de sécurité (5), ce dispositif étant constitué d'un clapet anti-retour (25) qui est placé à proximité dudit joint (5) et de la conduite (9) allant vers le réseau d'utilisation, et qui se trouve en communication d'une part avec l'amont dudit joint (5) et d'autre part avec son aval, c'est-à-dire avec le réseau d'utilisation.

8. Ensemble d'aiguillage selon l'une quelconque des revendications 1 à 7, caractérisé en ce qu'il comporte à sa partie inférieure une hélice fixe (3') dont le moyeu sert de guidage inférieur à la tige de manoeuvre (15) de la cloche (2), et dont les pales, par la mise en rotation du gaz, contribuent à la séparation de l'eau vésiculaire contenue dans le gaz.

9. Procédé de fonctionnement d'un ensemble d'aiguillage selon les revendications 1 à 8, caractérisée en ce que la descente de la cloche (2), commandée mécaniquement, respecte un cycle de vitesse tel que la descente est rapide, c'est-à-dire que la vitesse est comprise entre 18 et 60 mètres par minute, avant que la cloche (2) ait pris contact avec le joint d'eau fixe (18), et tel que la descente est lente, c'est-à-dire que la vitesse est comprise entre 1 et 5 mètres par minute, à partir du moment où la cloche a pénétré dans le joint d'eau fixe (18), et réciproquement en ce qui concerne la montée de la cloche.

## Patentansprüche

1. Leitsystem für einen staubhaltigen, mit Wasserdampf gesättigten, evtl. waremen Gas, das Wassertröpfchen enthalten kann, bei dem der vom vorgeordneten Gasnetz (8) aus tangential und horizontal anströmende Gasstrom entweder einer ersten nach oben gerichtete Senkrechtleitung (14) oder einer zweiten nach unten gerichtete Senkrechtleitung (3) zugeführt, die Wassertröpfchen und ein Teil des Staubes beseitigt und gleichzeitig jeweils diejenige der beiden momentan nicht mit Gas versorgte Leitung abgedichtet werden können, dadurch gekennzeichnet, daß das Leitsystem einen feststehenden Körper (1) mit einer darin beweglich angeordneten Glocke (2) aufweist, die eine Betätigungsstange (15) umfaßt sowie geeignete Mittel zur Bildung von zwei Dichtungen, die wechselweise jeweils eine der beiden obengenannten Senkrechtleitungen abdichten, wobei die Abdichtung nach unten zur zweiten Senkrechtleitung (3) hin zwangsweise aus einer als Wasserdichtung (18) ausgebildete Dichtung hergestellt wird, und daß dieser feststehende spezial ausgebildete Körper (1) mit dieser Glocke (2) zusammenwirkt um einen Zyklon zu bilden, der die Wassertröpfchen und ein Teil der im Gas enthaltene Staub am Eintritt in den Körper (1) beseitigt.

2. Leitsystem nach Anspruch 1, dadurch gekennzeichnet, daß diese Wasserdichtung in der unteren Stellung der Glocke (2) feststehend ist und den unteren Glockenrand aufnimmt um somit das vorgeordnete Gasnetz (8) von dem Verbrauchernetz (9) abzudichten, während das Gas in den Oberteil des Körpers (1) entweicht.

3. Leitsystem nach Anspruch 2, dadurch gekennzeichnet, daß in der oberen Stellung ein an dem Körper der Glocke (2) befestigter Metallmantel, der eine mit der Glocke (2) bewegliche Wasserdichtung (13) bildet, durch einfaches Eindringen eines passenden Festteils (14), die Abdichtung zwischen dem vorgeordneten Netz (8) und dem dem Oberteil des Körpers (1) nachgeordneten Netz (10) gewährleistet, während das Gas über das Unterteil des Körpers (1) zu dem Verbrauchernetz (9) hin strömt.

4. Leitsystem nach Anspruch 2, dadurch gekennzeichnet, daß die Glocke (2) an ihrem Oberteil einen konischen Kranz (24) aufweist, der in der oberen Stellung auf einem feststehenden Sitz (28) zur Auflage kommt, wobei diese Anordnung eine Trockendichtung bildet, die eine verhältnismässig ausreichende Abdichtung auf der Seite des dem Oberteil des feststehenden Körpers (1) nachgeordneten Netzes (10) gewährleistet.

5. Leitsystem nach einem der Ansprüche 1 bis 4, mit einer hydraulischen Sicherheitsdichtung (5), die auch bei zufällig eintretendem Überduck eine schnelle und wirksame Abdichtung zwischen dem Leitsystem und dem Verbrauchernetz (9) gewährleistet, dadurch gekennzeichnet, daß diese hydraulische Sicherheitsdichtung (5) über einen unter dem Sitz der Glocke (2) in unterer Stellung angeordneten Wasserhochbehälter (4) durch Schwerkraft versorgt wird.

6. Leitsystem nach Anspruch 5, dadurch gekennzeichnet, daß die hydraulische Sicherheitsdichtung (5) bei Störungen automatisch gebildet wird.

7. Leitsystem nach Anspruch 6, gekennzeichnet durch das Vorhandensein einer Vorrichtung mit der ein evtl. auftretender Überdruck oder Unterdruck der hydraulischen Sicherheitsdichtung (5) begrenzt werden kann, wobei diese Vorrichtung aus einer Rückschlagklappe (25) besteht, die in der Nähe dieser Dichtung (5) und der zu dem Verbrauchernetz führenden Leitung (9) angeordnet ist, und die einerseits mit dem Oberteil dieser Dichtung (5) und anderseits mit dessen Unterteil, d.h. mit dem Verbrauchernetz in Verbindung steht.

8. Leitsystem nach einem der Ansprüche 1 bis 7, dadurch gekennzeichnet, daß es an seinem unteren Teil eine feststehende Schraube (3') aufweist, deren Nabe als untere Führung für die Betätigungsstange (15) der Glocke (2) dient, und wobei deren Flügel durch die Kreisbewegung des Gases zur Trennung des in dem Gas enthaltenen bläschenartigen Wassers beitragen.

9. Verfahren zur Betätigung eines Leitsystems nach Anspruch 1 bis 8, dadurch gekennzeichnet, daß das mechanisch gesteuerte Senken der Glocke (2) nach einem Geschwindigkeitszyklus derart durchgeführt wird, daß bevor die Glocke (2) mit der feststehenden Wasserdichtung (18) in Kontakt tritt, die Absenkbewegung schnell ist, d.h. zwischen 10 und 60 Meter pro Minute liegt, und daß sobald die Glocke in die feststehende Wasserdichtung (18) eingedrungen ist, die Senkbewegung langsam ist, d.h. die Geschwindigkeit zwischen 1 und 6 Meter pro Minute liegt, und umgekehrt beim Hochfahren der Glocke.

## Claims

1. A unit for routing a gas which may be hot, dust-laden, saturated with water vapour, and may contain water droplets, which permits at the same time to measure the gas flow which it receives tangentially and horizontally from the upstream gas main (8) either in a first vertical duct (14) directed upwards, or in a second vertical duct (3) directed downwards, to remove the water droplets and a part of the dust, and simultaneously to ensure leaktightness with respect to that member of the pair of ducts which is not supplied with gas at the time, this unit being characterised in that it comprises a fixed body (1) containing a movable bell (2) which comprises an operating rod (15) and is provided with means capable of forming two seals ensuring leaktightness alternately with respect to each of the two aforesaid vertical ducts, the seal which ensures downward leaktightness opposite the second vertical duct (3) being necessarily formed by a water seal (18) and in that the said fixed body (1), of a special shape, cooperates with the said bell (2) to form a cyclone which removes the water droplets and a part of the dust which are present in the gas at the entry of the body (1).

2. A routing unit according to claim 1, characterised in that, with the bell (2) in a low position, the said water seal is fixed and receives the lower edge of the bell, thereby ensuring leaktightness between the upstream gas main (8) and the user main (9), whilst the gas is discharged in the upper part of the body 1.

3. A routing unit according to claim 2, characterised in that, in a high position, a metal skirt fixed on the body of the bell (2) and forming a water seal (13) which is movable with the bell (2) ensures, by simple entry into an adapted fixed part (14), leaktightness between the upstream main (8) and the main (10) situated downstream of the upper part of the body (1), whilst the gas is discharged through the lower part of the body (1) and is directed towards the user main (9).

4. A routing unit according to claim 2, characterised in that the bell (2) comprises, in its upper part, a conical crown (24) which, in a high position, bears on a fixed seat (28), this arrangement then forming a dry seal ensuring an adequate relative leaktightness with respect to the main (10) situated downstream of the upper part of the fixed body (1).

5. A routing unit according to any one of claims 1 to 4, comprising a hydraulic safety seal (5) ensuring fast and efficient leaktight sealing between the routing unit and the user main (9), even in the event of accidental overpressures, characterised in that this hydraulic safety seal (5) is supplied under gravity by a water tower (4) placed under the seat of the bell (2) in a low position.

6. A routing unit according to claim 5, characterised in that the formation of the hydraulic safety seal (5) is controlled automatically in the event of an incident.

7. A routing unit according to claim 6, characterised by the existence of a device which enables a possible overpressurising or underpressurising of the hydraulic safety seal (5) to be limited, this device consisting of a nonreturn valve (25) which is placed in the vicinity of the said seal (5) and of the duct (9) going towards the user main, and which communicates, on the one hand with the upstream side of the said seal (5) and, on the other hand, with its downstream side, that is to say with the user main.

8. A routing unit according to any one of claims 1 to 7, characterised in that it comprises in its lower part a fixed propeller (3') whose hub serves as a lower guide for the operating rod (15) of the bell (2), and whose blades, by causing the gas to rotate, contribute to the separation of water in the form of bubbles contained in the gas.

9. A process of operation of a routing unit according to claims 1 to 8, characterised in that the descent of the bell (2), controlled mechanically, conforms to a speed cycle such that the descent is fast, that is to say that the speed is between 18 and 60 metres per minute before the bell (2) comes in to contact with the fixed water seal (18), and such that the descent is slow, that is to 'say the speed is between 1 and 6 metres per minute, starting from the time when the bell has entered the fixed water seal (18), and conversely with respect to the rise of the bell.

# Fig 2

# Fig 1

# Fig 3

Fig 4

0 022 683

FIG 5

5 27 25 19

FIG 6

10
28
1
24
2
8
18